# EUROPEAN PATENT APPLICATION

(11) **EP 4 156 352 A1**
(43) Date of publication of application: **29.03.2023**
(21) Application number: 21198305.1
(22) Date of filing: 22.09.2021
(51) Int. Cl.: H01M 8/18, H01M 8/1025, H01M 8/1067, H01M 8/1069, H01M 8/10

(54) **CELLULOSE MEMBRANE FOR A REDOX FLOW BATTERY**

(71) Applicant: Cellfion AB, 114 28 Stockholm (SE)
(72) Inventor: LANDER, Sanna, 114 28 Stockholm (SE); WÅGBERG, Lars, 114 28 Stockholm (SE); EDBERG, Jesper, 114 28 Stockholm (SE); VAGIN, Mikhail, 114 28 Stockholm (SE); BERGGREN, Magnus, 114 28 Stockholm (SE); ERLANDSSON, Johan, 114 28 Stockholm (SE)
(74) Representative: Ström & Gulliksson AB

(57) **Abstract**

The present disclosure relates to a Redox Flow Battery (RFB) 10 comprising a posolyte 3, a negolyte 2, and a membrane 1 made of a crosslinked cellulose nanomaterial, the membrane separating the posolyte and the negolyte from each other. The present disclosure also relates to the membrane and to a method of producing the membrane.

## Description

### TECHNICAL FIELD

The present disclosure relates to a membrane and a Redox Flow Battery (RFB) comprising such a membrane.

### BACKGROUND

In a Redox Flow Battery (RFB), the active substances are circulated in two electrolyte flows (oxidant in posolyte, reductant in negolyte). Although RFBs have lower energy densities and rate capabilities than the state-of-the-art lithium-ion batteries, flow batteries store energy at a lower cost. An RFB can be designed according to needs directly from the choice of hardware since power and energy are decoupled, which is not the case with solid electrode batteries. The energy stored can be increased simply by increasing the volume of the storage tanks that contain the posolyte and negolyte, respectively. The power can be increased by increasing the accessible current collector area, for example by increasing the number of electrodes.

To minimize the volume of the storage tanks, while maximizing the energy density, a high concentration of reactants in solution is needed. Present-day chemistry used in the RFB exhibits solubilities of less than 2 M for vanadium-based redox chemistry (1.26 V; 25-40 Wh/kg) in sulfuric acid solution of 2-4 M. RFB technology based on vanadium electrochemistry in highly acidic medium is problematic for its cost, corrosion and environmental issues.

To improve the sustainability, aqueous organic RFB (AORFB) have been developed, using quinone electrochemistry based on proton-coupled electron transfer reactions. EP 3 447 836 discloses the use of porous polymer electrodes for quinone redox reactions in a flow battery.

A distinguishing feature of RFB technology is the membrane which separates the posolyte and negolyte from each other. In addition to chemical and mechanical stabilities, an RFB membrane should possess high ionic conductivity for the compensational ions and at the same time preventing crossover of the redox components of the posolyte and the negolyte. In vanadium RFBs, the most common membrane material is Nafion^{™}, primarily due to its high chemical and mechanical stability and high proton conductivity. However, Nafion^{™} exhibits poor barrier properties against crossover of the redox components in an aqueous environment. Further, Nafion^{™} is relatively expensive and, being a fluorosulfonic polymer, is potentially harmful to the environment.

Conventional dialysis membranes allow for size selection but without ion selectivity, also resulting in leakage of the redox components through the membrane when used in an RFB.

### SUMMARY

It is an objective of the present invention to provide an RFB membrane with improved sustainability and reduced leakage of redox components (also called electroactive elements) in, especially aqueous, electrolytes.

According to an aspect of the present invention, there is provided an RFB comprising a posolyte, a negolyte, and a membrane made of a crosslinked cellulose nanomaterial, the membrane separating the posolyte and the negolyte from each other.

According to another aspect of the present invention, there is provided a membrane comprising a crosslinked cellulose nanomaterial, wherein the cellulose nanomaterial is chemically modified to exhibit, on surfaces of the nanomaterial, aldehyde groups within the range of 0.5-1 mmol/g dry nanomaterial, preferably within the range of 0.7-0.9 mmol/g, and sulfo groups in an amount providing a charge within the range of 200-1500 µmol/g dry nanomaterial, preferably within the range of 300-1400 µmol/g, wherein at least some of the aldehyde groups have reacted with respective hydroxy groups on the surfaces to form crosslinks. The membrane may be for use in an RFB, e.g. in accordance with the previous aspect of the invention.

According to another aspect of the present invention, there is provided a method of preparing a membrane. The method comprises oxidation of cellulose fibres by means of sodium metaperiodate (NaIO₄) to provide aldehyde groups on surfaces of cellulose nanofibrils (CNF) within fibre walls of the fibres. The method also comprises sulfonation of some of the aldehyde groups, e.g. by means of sodium metabisulfite (Na₂S₂O₅, which in solution forms the active reactant NaHSO₃ which may take part in the sulfonation) to provide sulfo groups on the surfaces of the CNF, thus obtaining chemically modified CNF within the fibre walls. The method also comprises obtaining the chemically modified CNF in free form from the fibres by means of processing of the fibres, e.g. comprising mechanical processing by means of high-pressure homogenization. The method also comprises forming the membrane by dewatering an aqueous slurry comprising the separated chemically modified CNF, e.g. in a mould or by spraying onto a dewatering wire, preferably in a mould, e.g. by means of vacuum filtration or evaporation e.g. at elevated temperature.

By crosslinking the cellulose nanomaterial, the membrane can have improved stability in water or other solvent used in the posolyte and negolyte, preventing the membrane from disintegrating into a dispersion. The membrane can thus also retain its functionality and dimensions over time during use and the membrane can be more mechanically robust. The cellulose nanomaterial can also be chemically modified beyond the solubility limit of the modified cellulose nanomaterial. It has been found that such a crosslinked cellulose nanomaterial membrane can advantageously be used in e.g. an RFB or fuel cell.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic sectional side view of an RFB in accordance with some embodiments of the present invention.
Fig 2 is a schematic flow chart of a method in accordance with some embodiments of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

As used herein, and in accordance with the TAPPI document "Roadmap for the Development of International Standards for Nanocellulose" of October 24, 2011, as well as the ISO TC 229 protocols, the term "cellulose nanomaterials" includes plant-based nanocellulose as well as nanocellulose from bacteria, algae, tunicates, and other sources. Examples of nanocellulose, and thus of cellulose nanomaterials, include herein mentioned cellulose nanofibrils (CNF), cellulose nanocrystals (CNC) and cellulose microfibrils (CMF).

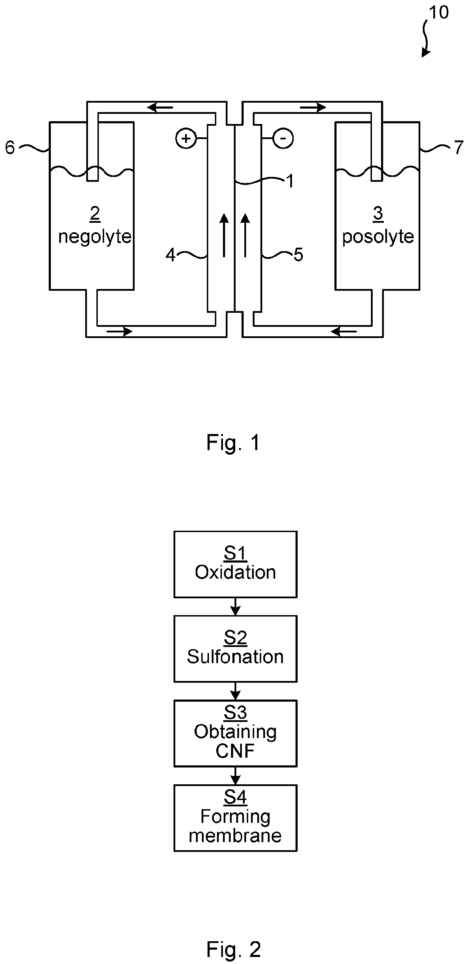

Figure 1 illustrates an RFB 10 comprising a negolyte 2 (also known as catholyte) in a negolyte tank 6 and a posolyte 3 (also known as anolyte) in a posolyte tank 7. Each of the negolyte 2 and the posolyte 3 is pumped or otherwise allowed to circulate (e.g. as indicated by the arrows in the figure) past or otherwise in contact with respective electrodes 4 and 5 separated by a membrane 1, which membrane allows ion transport between the posolyte and negolyte through the membrane while an electrical current is induced between the electrodes (as schematically indicated by the "+" and "-" signs in the figure). Thus, the membrane allows ion transport through the membrane while preventing the redox component(s) comprised in the negolyte 2 and posolyte 3, respectively, from passing through the membrane.

In accordance with the present invention, the membrane 1 is made of a crosslinked cellulose nanomaterial. In some embodiments, the cellulose nanomaterial of the membrane 1 comprises or consists of CNF, CNC, and/or CMF. In some preferred embodiments, the cellulose nanomaterial of the membrane 1 comprises or consists of CNF. Typically the cellulose nanomaterial consists of chemically modified CNF.

Preferably, the crosslinked cellulose nanomaterial is chemically modified to present a negatively charged environment in pores of the membrane, for allowing ion transport of positively charged ions through the membrane while preventing negatively charged or amphiphilic compounds from passing through the membrane.

In some embodiments of the present invention, the cellulose nanomaterial is chemically modified to exhibit, on surfaces of the nanomaterial, especially within pores of the membrane, aldehyde groups [-CHO] within the range of 0.5-1 mmol/g dry nanomaterial, preferably within the range of 0.7-0.9 mmol/g, as determined by titration. For instance, the titration may be performed by reacting the aldehyde groups of a sample of the material with a known dry weight with hydroxylamine, typically provided as hydroxylamine hydrochloride, at a specific pH (e.g. pH 4) which reaction releases a stochiometric amount of protons, lowering the pH. By performing a regular acid-base titration back to the specific pH, the number of aldehyde groups in the sample is determined. It should be noted that this relates to the amount of aldehyde groups remaining after the sulfonation. The total amount of introduced aldehyde groups prior to sulfonation is thus this remaining amount plus the amount of sulfo groups.

The aldehydes may be introduced by oxidation, e.g. of cellulose fibres or nanocellulose such as CNF, by means of sodium metaperiodate (NaIO₄). In some embodiments, the amount of NaIO₄ is within the range of 1-3 g/g dry fibre.

The aldehyde groups can contribute to the desired negatively charged environment within the membrane by facilitating introduction of acidic substituent groups, e.g. sulfo groups [-S(=O)₂-OH] as discussed herein, but they can also react for crosslinking as discussed below.

The crosslinking of the cellulose nanomaterial may be achieved by reaction of at least some of the aldehyde groups exhibited on the surfaces of the nanomaterial, typically with hydroxy groups [-OH] which are also exhibited on the surfaces of the nanomaterial. However, other ways of crosslinking the cellulose nanomaterial, physically and/or chemically, are also possible. When the membrane 1 is dry, all, substantially all or at least most of the aldehyde groups remaining after sulfonation may be in acetal or hemiacetal form after reaction with hydroxy groups. In water, a minor part of the crosslinks may be broken but most remain as hemiacetals at equilibrium. The crosslinking retains the structural integrity of the membrane and limits the swelling thereof in water or other solvent, e.g. when used in an RFB 10. Conveniently, the nanomaterial is crosslinked to such a degree that the membrane swells in the thickness direction within the range of 1.5-4 times, i.e. the thickness of the membrane 1 increases 1.5-4 times when immersed in an aqueous solution e.g. of the posolyte 3 and negolyte 2. In the plane of the membrane, the swelling is typically zero or negligible. As an example, a crosslinked membrane 1 with a dry thickness of 40 µm may swell e.g. two times to 80 µm or four times to 160 µm, when it would swell to several millimetres without crosslinking.

To introduce sulfo groups, at least some of the aldehyde groups exhibited on the surfaces of the nanomaterial can be sulfonated, e.g. by means of sodium metabisulfite (Na₂S₂O₅). In some embodiments, the amount of Na₂S₂O₅ is within the range of 0.5-2.5 g/g dry fibre.

In some embodiments of the present invention, the cellulose nanomaterial is chemically modified to exhibit, on surfaces of the nanomaterial, especially within pores of the membrane, sulfo groups in an amount providing a charge within the range of 200-1500 µmol/g nanomaterial, preferably within the range of 300-1400 µmol/g, as determined by conductometric titration in accordance with Katz "Determination of strong and weak acidic groups in sulphite pulps" of 1984.

Also the sulfo groups maybe negatively charged [-S(=O)₂-O] further contributing to the desired negatively charged environment within the membrane.

Alternatives to the use of Na₂S₂O₅ for introducing the sulfo groups are envisioned. For instance, an amine containing reagent may be used, e.g. sulfanilic acid and/or taurine. The amine can react with an aldehyde group to form imine which may then be reduced, e.g. by means of sodium borohydride, to form a stable amine, whereby the sulfo group would then be attached to the nanomaterial via the amine.

As mentioned above, each of the posolyte 3 and negolyte 2 comprises a redox component which is prevented from passing from the negolyte to the posolyte (or *vice versa)* by means of the membrane separating the posolyte and the negolyte from each other. The redox component may be any redox component conventionally used in RFB. In some embodiments of the present invention, one or both (preferably both) of the posolyte 3 and the negolyte 2 comprises an amphiphilic organic compound as redox component. Currently preferred amphiphilic organic compounds which may be used as redox component include amphiphilic organic compounds which may be used as dyes, e.g. Alizarin Red S, Natural Red 4, Indigo carmine and/or Acid Blue 25, preferably Alizarin Red S which works well with the membrane of the present disclosure. In some embodiments, both the posolyte 3 and the negolyte 2 comprise a same redox component at different oxidation states, e.g. any of the amphiphilic organic compounds mentioned above such as Alizarin Red S.

The membrane 1 of the present disclosure may be especially suitable for use with aqueous solutions. Thus, both the posolyte 3 and the negolyte 2 may be aqueous.

The membrane 1 may, when dry, consists to 100% of the crosslinked cellulose nanomaterial. However, in other embodiments, the membrane 1 may comprise the cellulose nanomaterial in combination with another nanomaterial.

The membrane 1 may, when dry, have a thickness within the range of 5-100 µm, which may be a suitable thickness for an RFB 10.

The membrane 1 may, when dry, have a density within the range of 1.2-1.6 g/cm3, preferably within the range of 1.4-1.5 g/cm³, which is close to the density of pure cellulose.

Figure 2 schematically illustrates some embodiments of the method of the present invention. The method is for preparing a membrane 1, e.g. for use in an RFB 10 as discussed herein, or in e.g. a fuel cell.

Cellulose fibres are oxidized Si by means of NaIO₄ to provide aldehyde groups on surfaces of CNF within fibre walls of the fibres. Then, some (but not all) of the thus provided aldehyde groups are sulfonated S2, e.g. by means of Na₂S₂O₅, to provide sulfo groups on the surfaces of the CNF, thus obtaining chemically modified CNF within fibre walls. Then, the chemically modified CNF are obtained S₃ in free form (i.e. separated from each other instead of bound in a fibre) by means of processing of the fibres, e.g. comprising mechanical processing by means of high-pressure homogenization. Then, the membrane is formed S₄ by dewatering an aqueous slurry comprising the separated chemically modified CNF, e.g. in a mould or by spraying onto a dewatering wire, preferably in a mould, to obtain the membrane in dry form. The mould may e.g. be on a filter, allowing the water to be removed by filtration, e.g. by means of vacuum or only gravity. Alternatively, the water may be removed from the mould by evaporation, e.g. at an elevated temperature, e.g. within the range of 40-80°C, such as within the range of 40-60°C.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A Redox Flow Battery, RFB, (10) comprising:
a posolyte (3);
a negolyte (2); and
a membrane (1) made of a crosslinked cellulose nanomaterial, the membrane separating the posolyte and the negolyte from each other.

2. The RFB of claim 1, wherein the cellulose nanomaterial of the membrane (1) comprises or consists of cellulose nanofibrils, CNF; cellulose nanocrystals, CNC; and/or cellulose microfibrils, CMF; preferably CNF.

3. The RFB of any preceding claim, wherein the cellulose nanomaterial is chemically modified to exhibit, on surfaces of the structure, hydrophilic and/or polar groups for preventing molecules of an amphiphilic compound in the posolyte (3) and/or the negolyte (2) from penetrating into and/or adsorbing onto the membrane nanomaterial.

4. The RFB of any preceding claim, wherein the cellulose nanomaterial is chemically modified to exhibit, on surfaces of the nanomaterial, aldehyde groups within the range of 0.5-1 mmol/g nanomaterial, preferably within the range of 0.7-0.9 mmol/g, and sulfo groups in an amount providing a charge within the range of 200-1500 µmol/g nanomaterial, preferably within the range of 300-1400 µmol/g, wherein at least some of the aldehyde groups have reacted with respective hydroxy groups on the surfaces to form crosslinks.

5. The RFB of any preceding claim, wherein one or both of the posolyte (3) and the negolyte (2) comprises an amphiphilic organic compound as redox component, e.g. Alizarin Red S, Natural Red 4, Indigo carmine and/or Acid Blue 25, preferably Alizarin Red S.

6. The RFB of any preceding claim, wherein the posolyte (3) and the negolyte (2) comprise a same redox component at different oxidation states.

7. The RFB of any preceding claim, wherein both the posolyte (3) and the negolyte (2) are aqueous.

8. A membrane (1) comprising a crosslinked cellulose nanomaterial, wherein the cellulose nanomaterial is chemically modified to exhibit, on surfaces of the nanomaterial, aldehyde groups within the range of 0.5-1 mmol/g nanomaterial, preferably within the range of 0.7-0.9 mmol/g, and sulfo groups in an amount providing a charge within the range of 200-1500 µmol/g nanomaterial, preferably within the range of 300-1400 µmol/g, wherein at least some of the aldehyde groups have reacted with respective hydroxy groups on the surfaces to form crosslinks.

9. The membrane of claim 8, wherein the cellulose nanomaterial of the membrane (1) comprises or consists of cellulose nanofibrils, CNF; cellulose nanocrystals, CNC; and/or cellulose microfibrils, CMF; preferably CNF.

10. The membrane of any claim 8-9, wherein the membrane (1), when dry, consists to 100% of the crosslinked cellulose nanomaterial.

11. The membrane of any claim 8-10, wherein the membrane (1), when dry, has a thickness within the range of 5-100 µm.

12. The membrane of any claim 8-11, wherein the membrane (1), when dry, has a density within the range of 1.2-1.6 g/cm³, preferably within the range of 1.4-1.5 g/cm³.

13. A method of preparing a membrane (1), the method comprising:
oxidation (S1) of cellulose fibres by means of sodium metaperiodate, NaIO₄, to provide aldehyde groups on surfaces of CNF within fibre walls of the fibres;
sulfonation (S2) of some of the aldehyde groups, e.g. by means of sodium metabisulfite, Na₂S₂O₅, to provide sulfo groups on the surfaces of the CNF, thus obtaining chemically modified CNF within fibre walls;
obtaining (S₃) the chemically modified CNF in free form from the fibres by means of processing of the fibres, e.g. comprising mechanical processing by means of high-pressure homogenization; and
forming (S4) the membrane (1) by dewatering an aqueous slurry comprising the separated chemically modified CNF, e.g. in a mould or by spraying onto a dewatering wire, preferably in a mould.

14. The method of claim 13, wherein the amount of NaIO₄ is within the range of 1-3 g/g fibre.

15. The method of claim 13 or 14, wherein the amount of Na₂S₂O₅ is within the range of 0.5-2.5 g/g fibre.
